# EUROPÄISCHE PATENTSCHRIFT

(11) **EP 1 680 716 B1**
(45) Veröffentlichungstag und Bekanntmachung des Hinweises auf die Patenterteilung: **16.02.2011**
(21) Anmeldenummer: 04797604.8
(22) Anmeldetag: 04.11.2004
(51) Int. Cl.: G05B 19/042, G05B 19/418

(54) **VERFAHREN ZUM ÜBERTRAGEN VON MESSWERTEN ZWISCHEN ZWEI MESSUMFORMERN**
METHOD FOR TRANSMITTING MEASURING VALUES BETWEEN TWO MEASURING TRANSDUCERS
PROCEDE DE TRANSMISSION DE VALEURS DE MESURE ENTRE DEUX TRANSDUCTEURS DE MESURE

(30) Priorität: 06.11.2003 DE 10352307
(43) Veröffentlichungstag der Anmeldung: 19.07.2006
(73) Patentinhaber: Endress + Hauser Flowtec AG, 4153 Reinach BL 1 (CH)
(72) Erfinder: BORST, Walter, 65626 Fachingen (DE); ÜHLIN, Ralf, 79639 Grenzach-Wyhlen (DE); SEIFERT, Oliver, 79713 Bad Säckingen (DE); KOUDAL, Ole, CH-5400 Baden (CH); POPP, Oliver, 5442 Fislisbach (DE)
(74) Vertreter: Andres, Angelika Maria
(86) Internationale Anmeldenummer: PCT/EP2004/012478
(87) Internationale Veröffentlichungsnummer: WO 2005/045782

(56) Entgegenhaltungen:
- DE-A1- 10 158 745
- US-B1- 6 449 715
- US-B1- 6 473 656

## Beschreibung

Die Erfindung betrifft ein Verfahren zum Übertragen von Messwerten zwischen zwei Messumformern gemäß dem Oberbegriff des Anspruchs 1.

In der Prozessautomatisierungstechnik werden vielfach Messumformer eingesetzt, die zur Erfassung und/oder Beeinflussung von Prozessvariablen dienen. Beispiele für derartige Messumformer sind Füllstandsmessgeräte, Durchflussmessgeräte, Druck- und Temperaturmessgeräte, pH- Redoxpotential -Messgeräte, Leitfähigkeitsmessgeräte etc., die als Sensoren die entsprechenden Prozessvariablen Füllstand, Durchfluss, Druck, Temperatur, pH- bzw. Leitfähigkeits-Wert erfassen.

Eine Vielzahl solcher Messumformer wird von der Firma Endress + Hauser® hergestellt und vertrieben.

Häufig sind die Messumformer über eine Kommunikationsverbindung mit einer übergeordneten Einheit, z. B. einem Leitsystem bzw. einer Steuereinheit (SPS) verbunden. Ein Beispiel für eine derartige Kommunikationsverbindung stellt der HART®-Standard dar. Mit Hilfe dieses Standards können Messumformer Daten sowohl in digitaler als auch in analoger Form zu einem Leitsystem übertragen. Außerdem lassen sich so Messumformer mit Hilfe einer entsprechenden Bedieneinheit sehr leicht parametrieren und in Betrieb nehmen. Die Messwerte werden in analoger Form in bekannter 4-20mA Technik zum Leitsystem übertragen. Da die HART-Kommunikation nach dem Master-Slave-Prinzip arbeitet, können die Messumformer Daten nur nach einer Anfrage durch den Master zum Leitsystem übertragen.

Teilweise ist auch eine Datenübertragung zwischen mehreren Messumformem und einem Leitsystem erwünscht. Ein solcher Datenaustausch ist z. B. im HART-Multi-Drop-Betrieb möglich. Ein Nachteil hierbei besteht jedoch darin, dass jeder Messumformer der an ein HART-Multi-Drop-Netzwerk angeschlossen ist und eine von Null verschiedene Adresse besitzt, eine konstante Stromaufnahme von 4mA besitzen muss. Eine analoge Signalübertragung zum Leitsystem ist im HART-Multi-Drop-Betrieb nicht möglich.
Bei einigen Anwendungen müssen aus Messwerten unterschiedlicher Messumformer abgeleitete Messgrößen ermittelt und weiterverarbeitet werden. Eine Möglichkeit hierfür besteht darin, dass die Messwerte an das Leitsystem übertragen werden und dort entsprechende Auswerteprogramme zur Weiterverarbeitung der Messwerte vorgesehen sind. Dieses Verfahren hat aber verschiedene Nachteile. Zum einen ist das Umprogrammieren von Leitsystemen sehr aufwendig. Weiterhin sind die Auswerteprogramme in der Regel sehr anwendungsbezogen und benötigen Know-how, das nur dem Hersteller der Messumformer zur Verfügung steht und ungern weitergegeben wird. Außerdem sind Leitsysteme für Steuerungsaufgaben und nicht für die anwendungsspezifische Messwertauswertung geeignet. Für die Leitsystemhersteller würde dies einen erheblichen Aufwand bedeuten, um derartige anwendungsspezifische Funktionalitäten in ihre Systeme zu integrieren.

Eine andere Möglichkeit aus Messwerten unterschiedlicher Messumformer abgeleitete Messgrössen zu ermitteln und weiterzuverarbeiten, besteht darin, dass die Messwerte an einen Flowcomputer (z.B. RMS621 Fa. E+H Wetzer) übertragen werden und im Flowcomputer weiterverarbeitet werden. Vom Flowcomputer werden dann die weiterverarbeitete Daten an das Leitsystem übertragen. Die entscheidenden Nachteile hierin sind, dass hierfür eine weitere Einheit in der Verarbeitungskette notwendig ist und dass die Messwerte typisch über analoge Schnittstellen übertragen werden, was zu einem Genauigkeitsverlust führen kann.

Aus der US 6,473,656 B1 ist Prozessautomatisierungssystem zur Realisierung einer Mess-, Steuer- und Regelanlage bekannt geworden. Eine Bedieneinrichtung ist über eine Kommunikationseinrichtung und einen Datenbus an prozessnahe Technologiemodule angeschlossen. Die Technologiemodule führen selbständig vorgegebene Funktionen im Rahmen der Prozessautomatisierung aus. In einem dem Technologiemodul zugeordneten Speicher befindet sich modulspezifische Information über die jeweilige Funktion des zugehörigen Technologiemoduls und über seine Einbindung in die Mess-, Steuer- und Regelanlage. Beispielsweise erhält ein Regler von einem Sollwertgeber den Sollwert und von einem Istwertgeber, z.B. einem Sensor, einen Istwert und berechnet daraus die Stellgröße, die er einem Stellglied zuführt. Jedes Technologiemodul enthält eine Kommunikationseinheit, über die es an den Datenbus anschlossen ist. Während einer Initialisierungsphase wird die modulspezifische Information an die Kommunikationseinrichtung übertragen, in der diese Informationen für einen Zugriff durch die Bedieneinheit gespeichert werden.

In der US 6,449,715 B1 wird ein Konfigurationssystem zur Verwendung in einem Prozesssteuernetzwerk beschrieben. Das Konfigurationssystem weist eine Steuereinrichtung, ein erstes Einrichtungsnetzwerk, das unter Verwendung eines ersten Eingabe-/Ausgabeprotokolls, wie etwa eines Fieldbus- oder eines HART-Einrichtungsprotokolls, kommuniziert, und ein Profibusnetzwerk auf, das unter Verwendung eines Profibus-Eingabe-/Ausgabekommunikationsprotokolls kommuniziert. Das System enthält eine Konfigurationsdatenbank, die Konfigurationsinformationen speichert, die das erste Einrichtungsnetzwerk betreffen, und Konfigurationsinformationen, die das Profibus-Einrichtungsnetzwerk betreffen, eine Datenzugriffsroutine, die automatisch Konfigurationsinformationen, die das erste Einrichtungsnetzwerk betreffen, und Konfigurationsinformationen, die das Profibus-Einrichtungs-netzwerk betreffen, abfragt, und einen Konfigurator, der das Profibus-Einrichtungsnetzwerk, basierend auf der Profibus-Einrichtungsnetzwerk-Konfigurationsinformation, konfiguriert. Der Konfigurator speichert die Profibus-Einrichtungsnetzwerk-Konfigurationsinformation in der Konfigurationsdatenbank zusammen mit den Konfigurationsinformationen, die das erste Einrichtungsnetzwerk betreffen. Eine Dokumentationsroutine greift auf die Konfigurationsdatenbank zu und zeigt ein Prozesssteuerdokumentationsschema an, das die Konfiguration des ersten Einrichtungsnetzwerks und des Profibus-Einrichtungsnetzwerks innerhalb des Prozesssteuersystems anzeigt.

Aufgabe der vorliegenden Erfindung ist es deshalb, ein Verfahren zum Übertragen von Messwerten zwischen zwei Messumformem anzugeben, das die oben genannten Nachteile nicht aufweist und das einfach und kostengünstig durchführbar ist.

Gelöst wird diese Aufgabe durch das in Anspruch 1 angegebene Verfahren.

Vorteilhafte Weiterentwicklungen der Erfindung sind in den Unteransprüchen angegeben.

Die wesentliche Idee der Erfindung besteht darin, bei zwei Messumformern, die an ein Leitsystem als Master über zwei Kommunikationsverbindungen digitale Signale nach dem Master-Slave-Prinzip und analoge Signale übertragen, eine zusätzliche Kommunikationsverbindung zur Übertragung der digitalen Signale zwischen den beiden Kommunikationsverbindungen vorzusehen, wobei der Empfänger Messumformer die eingehenden Signale nach mindestens einem charakteristischen Wert des Sender Messumformers untersucht, um die benötigte Messgröße aufzufinden.
In einer Weiterentwicklung der Erfindung erfolgt die Kommunikation zwischen den Messumformem und dem Leitsystem nach dem HART®-Standard. Damit können die Messumformer mit dem Leitsystem sowohl analog als auch digital kommunizieren und zusätzlich untereinander entsprechend dem HART-Standard digital Daten austauschen.

Bei dem charakteristischen Wert kann es sich um eine Einheitenkennzahl, die im HART®-Standard festgelegt ist, handeln. Jede Einheitenkennzahl kennzeichnet einen Messwert in einer bestimmten Einheit (z. B. Druck, Temperatur, etc.).

Damit der Sender Messumformer seine Messwerte in regelmäßigen Abständen zum Empfänger Messumformer überträgt, wird der Sender Messumformer in den HART®-Burst-Modus versetzt. In diesem Modus kann ein Messumformer auch als Slave unabhängig von einer Anfrage eines Masters seine Messwerte senden.

In einer alternativen Ausgestaltung wird der empfangende Messumformer im Mastermodus betrieben, der die Messwerte des Sender Messumformers zyklisch ausliest.

Zur Ermittlung einer abgeleiteten Messgröße ist im empfangenen Messumformer eine Rechnereinheit mit einem Auswerteprogramm installiert.

In einer speziellen Ausgestaltung der Erfindung handelt es sich bei dem empfangenen Messumformer um ein Vortex-Messgerät und bei dem Sender Messumformer um ein Druckmessgerät, wobei das Auswerteprogramm aus der Fließgeschwindigkeit und dem Druck als abgeleitete Messgröße z. B. den Masse-, Normvolumen- oder Wärmestromwert ermittelt.

Nachfolgend ist die Erfindung anhand eines in der Zeichnung dargestellten Ausführungsbeispiels näher erläutert.

Es zeigt:

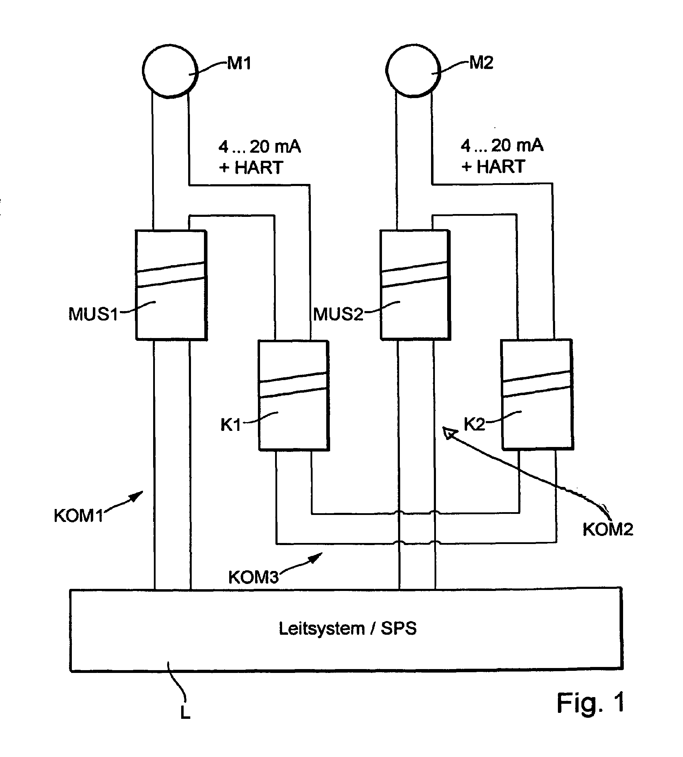

- Fig. 1: zwei Messumformer, die mit einem Leitsystem verbunden sind, in schematischer Darstellung.

In Fig. 1 ist schematisch dargestellt, wie zwei Messumformer M1, M2 der Prozessautomatisierungstechnik über zwei Kommunikationsverbindungen KOM1, KOM2 mit einem Leitsystem L verbunden sind. Die Spannungsversorgung der beiden Messumformer erfolgt über zwei Messumformerspeisegeräte MUS1 und MUS2, die in die Kommunikationsverbindung KOM1 bzw. KOM2 integriert sind. Bei der Kommunikationsverbindung KOM1 bzw. KOM2 handelt es sich um eine Zweileiterverbindung zu den jeweiligen Messumformem M1 bzw. M2. In der Kommunikationsverbindung KOM1 bzw. KOM2 ist eine Kommunikationsverbindung KOM3 vorgesehen, über die digitale Signale zwischen den beiden Kommunikationsverbindungen KOM1 bzw. KOM2 ausgetauscht werden können. Aus Ex-Sicherheitsgründen sind in der Kommunikationsverbindung KOM3 zwei HART-Koppler K1 bzw. K2 vorgesehen, die je eine galvanische Trennung in der Kommunikationsverbindung KOM3 bewirken. Die Datenübertragung erfolgt direkt über die Kommunikationsverbindung KOM3 und nicht über das Leitsystem L.

Das Leitsystem L dient im Wesentlichen dazu, Steuerungsaufgaben zu erfüllen. Die Kommunikation zwischen dem Leitsystem L und dem Messumformer M1 erfolgt entweder über die 4-20mA Stromschleife oder über digitale HART-Signale. Bei dem Messumformer M1 kann es sich z. B. um einen Druckmessumformer handeln. Der Messumformer M2 ist z. B. ein Vortex-Messgerät Prowirl 73 der Fa. Endress + Hauser®.

Nachfolgend ist das erfindungsgemäße Verfahren näher beschrieben. Über die Kommunikationsverbindung KOM3 können digitale Signale vom Messumformer M1 an den Messumformer M2 übertragen werden.
Hierfür ist nur eine geringfügige Umprogrammierung des Messumformers M2 notwendig. Für den Messumformer M1 kann ein beliebiges Druckmessgerät mit einer HART®-Schnittstelle eingesetzt werden. Da das Leitsystem L nicht an diesem Datenaustausch beteiligt ist, ist eine Änderung der Leitsystem-Programmierung nicht notwendig. Dies ist von großer Wichtigkeit.

Um den gewünschten Messwert aufzufinden und bearbeiten zu können, untersucht der Empfänger-Messumformer M2, die vom Sende-Messumformer M1 eingehende Signale nach mindestens einem charakteristischen Wert des Messumformers M1. Der zu diesem charakteristischen Wert zugehörende Messwert wird dann im Messumformer M2 weiterverarbeitet.
Der benötigte Druckmesswert wird über die Einheitenkennzahl, die im HART-Standard festgelegt ist, erkannt.

Damit der Messumformer M1 seine Messwerte an den Messumformer M2 überträgt, wird der Messumformer M1 mit einem Bediengerät (z.B. Handheld) in den HART®-Burst-Modus versetzt. In diesem Modus sendet der Messumformer M1 seine Messwerte unabhängig von einer Anfrage durch das Leitsystem L. Dem Messumformer M2 stehen somit die aktuellen Messwerte des Messumformers M1 permanent zur Verfügung, so dass in einer im Messumformer M2 vorgesehenen Rechnereinheit auch die aktuelle abgeleitete Messgröße ermittelt werden kann.

In einer alternativen Ausgestaltung der Erfindung überwacht der Messumformer M2 bei seiner Inbetriebnahme die Kommunikationsverbindung K2 auf eingehende Burst-Nachrichten. Ist dies nicht der Fall, so versucht der Messumformer M2 den Messumformer M1 in den Burst-Modus zu versetzen. Gelingt dies, so kann das oben beschriebene Verfahren zur Datenübertragung durchgeführt werden.

In einer weiteren alternativen Ausgestaltung der Erfindung wird der Messumformer M2 im Mastermodus betrieben. In diesem Modus liest der Master M2 die Messwerte des Messumformers M1 zyklisch aus. Dieser Modus erlaubt aber nur noch einen weiteren Master z. B. das Leitsystem L. In diesem Fall kann keine Bedieneinheit zum Parametrieren der Messumformer M1 bzw. M2 mehr angeschlossen werden, da eine Bedieneinheit immer als Master fungieren muss.

Der wesentliche Vorteil der Erfindung ist darin zu sehen, dass ein spezieller Messumformer M2 mit verschiedenen Messumformern M1, die von unterschiedlichen Herstellern stammen können, eingesetzt werden kann, um eine bestimmte abhängige Messgröße aus den Messwerten dieser beiden Messumformer zu ermitteln. Ein weiterer Aspekt der Erfindung besteht darin, dass keine Änderungen der Programmierung am Leitsystem L vorgenommen werden müssen. Ein weiterer Aspekt der Erfindung besteht darin, dass Messwerte der Messumformer M1 digital an den Messumformer M2 übertragen werden - ohne Genauigkeitsverluste durch z.B. eine digital-analog und nachfolgende analog-digital Wandlung. Das Leitsystem L kommuniziert unabhängig von der Kommunikationsverbindung KOM3 mit den Messumformern M1 bzw. M2.
Nur am Messumformer M2 sind geringfügige Software-Änderungen notwendig.

Mit Hilfe des erfindungsgemäßen Verfahrens ist eine einfache Datenübertragung von Messwerten zwischen zwei Messumformern M1 und M2 möglich.

## Patentansprüche

1. Verfahren zum Übertragen von Messwerten zwischen zwei Messumformem (M1, M2), die an ein Leitsystem (SPS), das als Master dient, über zwei Kommunikationsverbindungen (KOM1, KOM2) digitale Signale nach dem Master/Slave-Prinzip und analoge Signale übertragen,
wobei ein erster der zwei Messumformer (M1) über eine erste der zwei Kommunikationsverbindungen (KOM1) mit dem Leitsystem (SPS) verbunden ist,
wobei ein zweiter der zwei Messumformer (M2) über eine zweite der zwei Kommunikationsverbindungen (KOM2) mit dem Leitsystem (SPS) verbunden ist,
**dadurch gekennzeichnet,**
**dass** die digitalen Signale über eine zusätzliche Kommunikationsverbindung (KOM3), welche zwischen den beiden Kommunikationsverbindungen (KOM1, KOM2) vorgesehen ist, auch zwischen den beiden Messumformem (M1, M2) übertragen werden, und
**dass** der Empfänger-Messumformer (M1; M2) die eingehenden digitalen Signale nach mindestens einem charakteristischen Wert des Sende-Messumformers (M2; M1) untersucht, um die für die Auswertung im Empfänger-Messumformer (M1; M2) benötigten Messwerte aufzufinden.

2. Verfahren nach Anspruch 1, **dadurch gekennzeichnet, dass** die Kommunikation zwischen den Messumformem (M1, M2) und dem Leitsystem (SPS) nach dem HART®-Standard erfolgt.

3. Verfahren nach einem der vorhergehenden Ansprüche, **dadurch gekennzeichnet, dass** der Empfänger-Messumformer (M2; M1) für den Fall, dass es sich bei dem charakteristischen Wert um eine Einheitenkennzahl handelt, die einen Messwert in einer bestimmten Einheit kennzeichnet, die jeweilige Einheitenkennzahl auswertet, deren Bedeutung im HART®-Standard festgelegt ist.

4. Verfahren nach einem der vorhergehenden Ansprüche, **dadurch gekennzeichnet, dass** der Sende-Messumformer (M1; M2) in den HART@-Burst-Modus versetzt wird, um seine Messwerte in regelmäßigen Abständen zu senden.

5. Verfahren nach einem der der Ansprüche 1-3 **dadurch gekennzeichnet, dass** der Empfänger-Messumformer (M2; M1) im Master-Modus betrieben wird und die Messwerte des Sende-Messumformers (M1; M2) ausliest.

6. Verfahren nach einem der vorhergehenden Ansprüche, **dadurch gekennzeichnet, dass** der Empfänger-Messumformer (M2; M1) und der Sende-Messumformer (M1; M2) unterschiedliche Messgrößen erfassen.

7. Verfahren nach Anspruch 6, **dadurch gekennzeichnet, dass** im Empfänger-Messumformer (M2; M1) eine Rechnereinheit mit einem Auswerteprogramm installiert ist, das aus den unterschiedlichen Messgrößen eine abgeleitete Messgröße ermittelt.

8. Verfahren nach Anspruch 6 oder 7, **dadurch gekennzeichnet, dass** der Empfänger-Messumformer (M2; M1) ein Vortex-Messgerät und der Sende-Messumformer (M1; M2) ein Druck-Messgerät ist, die die Fließgeschwindigkeit und den Druck in einem Medium bestimmen.

9. Verfahren nach Anspruch 8, **dadurch gekennzeichnet, dass** im Vortex-Meßgerät eine Durchflussrechnereinheit installiert ist, die aus dem Druckwert und der Fließgeschwindigkeit des Mediums eine abgeleitete Messgröße (z. B. Wärmestromwert) ermitteln.

10. Verfahren nach Anspruch 8 bis 9, **dadurch gekennzeichnet, dass** das Vortex-Messgerät einen zusätzlichen eingebauten Temperatursensor aufweist.

11. Verfahren nach Anspruch 10, **dadurch gekennzeichnet, dass** im Vortex-Meßgerät eine Durchflussrechnereinheit installiert ist, die aus der Fließgeschwindigkeit des Mediums, dem Temperaturwert und dem Druck eine abgeleitete Messgröße (z. B. Wärmestromwert oder Massestromwert) ermittelt.

12. Verfahren nach Anspruch 6 oder 7, **dadurch gekennzeichnet, dass** der Empfänger Messumformer (M2; M1) ein Vortex-Messgerät ist und der Sender-Messumformer (M1; M2) ein Temperatur-Messgerät ist, die die Fließgeschwindigkeit und die Temperatur in einem Medium bestimmen.

13. Verfahren nach Anspruch 12, **dadurch gekennzeichnet, dass** im Vortex-Meßgerät eine Durchflussrechnereinheit installiert ist, die aus der Fließgeschwindigkeit des Mediums und der Temperatur eine abgeleitete Messgröße (z. B. Wärmestromwert oder Massestromwert bei Flüssigkeiten oder Sattdampf) ermittelt.

14. Verfahren nach Anspruch 1 bis 13, wobei der Empfänger-Messumformer (M2; M1) Signale von mehr als einem Sender-Messumformer (M1; M2) einliesst und auswertet.

15. Verfahren nach Anspruch 8 bis 14, wobei der Empfänger-Messumformer (M2; M1) ein Coriolis-Durchflussmessgerät, ein Ultraschall-Durchflussmessgerät oder ein magnetisch-Induktiv oder thermisch arbeitendes Durchflussmessgerät ist.

## Claims

1. Method for transmitting measured values between two transmitters (M1, M2) which transmit digital signals, based on the master/slave principle, and analog signals, to a control system (PLC) via two communication connections (KOM1, KOM2),
where a first of the two transmitters (M1) is connected to the control system (PLC) via a first of the two communication connections (KOM1),
where a second of the two transmitters (M2) is connected to the control system (PLC) via a second of the two communication connections (KOM2),
**characterized in that**
the digital signals are also transmitted between the two transmitters (M1, M2) via an additional communication connection (KOM3) which is provided between the two communication connections (KOM1, KOM2), and
the receiver transmitter (M1; M2) examines the incoming digital signals for at least one characteristic value of the sender transmitter (M2; M1) to find the measured values required for the evaluation in the receiver transmitter (M1; M2).

2. Method as per Claim 1, **characterized in that** the communication between the transmitters (M1, M2) and the control system (PLC) takes place on the basis of the HART ® standard.

3. Method as per one of the previous claims, **characterized in that** in situations in which the characteristic value is a unit characteristic which identifies a measured value in a certain unit, the receiver transmitter (M2; M1) evaluates the unit characteristic whose meaning is defined in the HART ® standard.

4. Method as per one of the previous claims, **characterized in that** the sender transmitter (M1; M2) is set to the HART ® burst mode in order to send its measured values at regular intervals.

5. Method as per one of the Claims 1-3, **characterized in that** the receiver transmitter (M2; M1) is operated in the master mode and reads out the measured values of the sender transmitter (M1; M2).

6. Method as per one of the previous claims, **characterized in that** the receiver transmitter (M2; M1) and the sender transmitter (M1; M2) record different measured variables.

7. Method as per Claim 6, **characterized in that** a computer unit is installed in the receiver transmitter (M2; M1) with an evaluation program that determines a derived measured variable from the different measured variables.

8. Method as per Claim 6 or 7, **characterized in that** the receiver transmitter (M2; M1) is a vortex measuring device and the sender transmitter (M1; M2) is a pressure measuring device which determine the flow velocity and the pressure in a medium.

9. Method as per Claim 8, **characterized in that** a flow computer unit is installed in the vortex measuring device and determines a derived measured variable (e.g. heat flow value) from the pressure value and the flow velocity of the medium.

10. Method as per Claim 8-9, **characterized in that** the vortex measuring device has an additional installed temperature sensor.

11. Method as per Claim 10, **characterized in that** a flow computer unit is installed in the vortex measuring device and determines a derived measured variable (e.g. heat flow value or mass flow value) from the flow velocity of the medium, the temperature value and the pressure.

12. Method as per Claim 6 or 7, **characterized in that** the receiver transmitter (M2; M1) is a vortex measuring device and the sender transmitter (M1; M2) is a temperature measuring device which determine the flow velocity and the temperature in a medium.

13. Method as per Claim 12, **characterized in that** a flow computer unit is installed in the vortex measuring device and determines a derived measured variable (e.g. heat flow value or mass flow value in the case of liquids or saturated steam) from the flow velocity of the medium and the temperature.

14. Method as per Claim 1-13, where the receiver transmitter (M2; M1) reads in and evaluates signals from more than one sender transmitter (M1; M2).

15. Method as per Claim 8-14, where the receiver transmitter (M2; M1) is a Coriolis flowmeter, an ultrasonic flowmeter or an electromagnetic or thermal flowmeter.

## Revendications

1. Procédé destiné à la transmission de valeurs mesurées entre deux transmetteurs (M1, M2), qui transmettent, par l'intermédiaire de deux liaisons de communication (KOM1, KOM2), à un système numérique de contrôle commande (API), qui sert de maître, des signaux numériques d'après le principe maître/esclave, ainsi que des signaux analogiques,
un premier transmetteur (M1) parmi les deux transmetteurs étant relié avec le système numérique de contrôle commande (API) par l'intermédiaire d'une première liaison (KOM1) parmi les deux liaisons de communication,
un deuxième transmetteur (M2) parmi les deux transmetteurs étant relié avec le système numérique de contrôle commande (API) par l'intermédiaire d'une deuxième liaison (KOM2) parmi les deux liaisons de communication,
**caractérisé en ce**
**que** les signaux numériques sont transmis par l'intermédiaire d'une liaison de communication (KOM3) supplémentaire, laquelle est prévue entre les deux liaisons de communication (KOM1, KOM2), également entre les deux transmetteurs (M1, M2), et que le transmetteur de réception (M1, M2) analyse les signaux numériques entrants concernant au moins une valeur caractéristique du transmetteur d'émission (M2, M1), afin de déterminer les valeurs mesurées nécessaires pour l'évaluation au sein du transmetteur de réception (M 1, M2).

2. Procédé selon la revendication 1, **caractérisé en ce que** la communication entre les transmetteurs (M1, M2) et le système numérique de contrôle commande (API) est réalisée d'après la norme HART@.

3. Procédé selon l'une des revendications précédentes, **caractérisé en ce que** le transmetteur de réception (M2, M1), pour le cas où il s'agit, concernant la valeur caractéristique, d'un code d'unité caractérisant une valeur mesurée dans une unité déterminée, évalue le code d'unité respectif, dont la signification est définie dans la norme HART@.

4. Procédé selon l'une des revendications précédentes, **caractérisé en ce que** le transmetteur d'émission (M1, M2) est mis en mode "burst" HART@, afin d'émettre ses valeurs mesurées à intervalles réguliers.

5. Procédé selon l'une des revendications 1 à 3, **caractérisé en ce que** le transmetteur de réception (M2, M1) est utilisé en mode maître et lit les valeurs mesurées du transmetteur d'émission (M 1, M2).

6. Procédé selon l'une des revendications précédentes, **caractérisé en ce que** le transmetteur de réception (M2, M1) et le transmetteur d'émission (M1, M2) acquièrent des grandeurs de mesure distinctes.

7. Procédé selon la revendication 6, **caractérisé en ce qu'**est installée, dans le transmetteur de réception (M2, M1), une unité d'ordinateur pourvue d'un programme d'évaluation, qui détermine une grandeur de mesure dérivée des différentes grandeurs de mesure.

8. Procédé selon la revendication 6 ou 7, **caractérisé en ce que** le transmetteur de réception (M2, M1) est un appareil de mesure de vortex et le transmetteur d'émission (M1, M2) un appareil de mesure de pression, qui déterminent la vitesse d'écoulement et la pression au sein d'un produit.

9. Procédé selon la revendication 8, **caractérisé en ce qu'**est installée dans l'appareil de mesure de vortex une unité de calcul de débit, qui détermine à partir de la valeur de pression et de la vitesse d'écoulement du produit une grandeur de mesure dérivée (p. ex. valeur de flux thermique).

10. Procédé selon la revendication 8 à 9, **caractérisé en ce que** l'appareil de mesure de vortex comporte un capteur de température intégré supplémentaire.

11. Procédé selon la revendication 10, **caractérisé en ce qu'**est installée dans l'appareil de mesure de vortex une unité de calcul de débit, qui détermine à partir de la vitesse d'écoulement du produit, de la valeur de température et de la pression, une grandeur de mesure dérivée (p. ex. valeur de flux thermique ou valeur de flux massique).

12. Procédé selon la revendication 6 ou 7, **caractérisé en ce que** le transmetteur de réception (M2, M1) est un appareil de mesure de vortex et le transmetteur d'émission (M1, M2) un appareil de mesure de température, qui déterminent la vitesse d'écoulement et la température au sein d'un produit.

13. Procédé selon la revendication 12, **caractérisé en ce que** qu'est installée dans l'appareil de mesure de vortex une unité de calcul de débit, qui détermine à partir de la vitesse d'écoulement du produit et de la température, une grandeur de mesure dérivée (p. ex. valeur de flux thermique ou valeur de flux massique pour les liquides ou la vapeur saturée)

14. Procédé selon la revendication 1 à 13, pour lequel le transmetteur de réception (M2, M1) lit et évalue des signaux provenant de plus d'un transmetteur d'émission (M1, M2).

15. Procédé selon la revendication 8 à 14, pour lequel le transmetteur de réception (M2, M1) est un débitmètre Coriolis, un débitmètre ultrasonique ou un débitmètre fonctionnant sur un principe magnéto-inductif ou thermique.
